# EUROPEAN PATENT APPLICATION

(11) **EP 0 959 414 A1**
(43) Date of publication of application: **24.11.1999**
(21) Application number: 99109963.1
(22) Date of filing: 20.05.1999
(51) Int. Cl.: G06F 15/80, G05B 13/02

(54) **Optimization method for a fuzzy neural network**

(30) Priority: 20.05.1998 JP 13854598; 04.06.1998 JP 15567498
(71) Applicant: YAMAHA HATSUDOKI KABUSHIKI KAISHA, Iwata-shi Shizuoka-ken (JP)
(72) Inventor: Masashi, Yamaguchi, Iwata-shi, Shizuoka-ken (JP)
(74) Representative: Grünecker, Kinkeldey, Stockmair & Schwanhäusser Anwaltssozietät

(57) **Abstract**

An optimization method for a fuzzy neural network or fuzzy or neural network, wherein the process of calculating an inference value by fuzzy inference is constituted with a neural network: A parameter to be identified or adjusted by fuzzy inference is made to correspond to the coupling weight of the neural network, and a fuzzy rule and/or membership function is adjusted by updating the coupling weight by learning. A plural number of input candidate data that can be input data at least to the fuzzy neural network are prepared in advance, using an evolutionary algorithm, information on adoption or non-adoption of at least respective input data are made into a plural number of individuals, and the individuals are made to evolve according to estimated accuracy using the evolutionary algorithm.

## Description

This invention relates to an optimization method for a fuzzy neural network or fuzzy or neural network, wherein the process of calculating an inference value by fuzzy inference is constituted with a neural network, a parameter to be identified or adjusted by fuzzy inference is made to correspond to the coupling weight of the neural network, and a fuzzy rule and/or membership function is adjusted by updating the coupling weight by learning.

Conventionally, it has been practiced to constitute a fuzzy neural network as a combination of fuzzy inference and a neural network, in which the fuzzy inference is capable of linguistically stating, by the use of if-then type fuzzy rules, an algorithm having ambiguity as in a human decision and in which the neural network is capable of identifying any input-output relationship by updating coupling factors by a learning function, so that the fuzzy neural network has the advantages of both of fuzzy inference and the neural network.

In such fuzzy neural network, the antecedent membership function in the fuzzy inference is represented with a sigmoid function or the like, the central position and the gradient of the membership function and the output values of the fuzzy rule are made to correspond to the coupling weights of the neural network, and the correction or the like of the shape of the membership function is possible by the use of a learning method such as the back propagation method.

The fuzzy neural network constituted as described above has an advantage that it is optimized by learning within the range of the input information, irrespective of the type of input information used for obtaining the output information intended for estimation because the correction or the like of the configuration of the membership function is possible by the use of a learning method such as the back propagation method. However, the decision on the type of information that would optimize the inference output information has been up to the design engineer.

Therefore, the design engineer has to choose the best suited information from the information deemed to be related to the output information intended for estimation.

However, there are various kinds of output information intended for estimation by the use of a fuzzy neural network or fuzzy or neural network. For example, the information such as the intake air rate in the engine control which requires an expensive sensor if direct detection is intended, the information that is very difficult to detect directly such as the rate of fuel injected from an injection device and adhering to the intake pipe wall or the evaporation speed of the adhering fuel, and the information that must be estimated from the information other than the subject of sensing because of sharing a sensor. As a matter of course, the kinds of output information and related pieces of information are many. Choosing the best information from among the pieces of related information, while also taking into consideration the combinations with other pieces of input information, is a very difficult work. Obtaining the types and combinations of the best suited pieces of input information requires considerable amount of time and labor.

Therefore, the decision on kinds and combinations of the output information has been up to the experience and knowledge of the design engineer. A problem here has been that the chosen types and combinations have not been always the optimum.

Accordingly, it is an objective of the present invention to provide an optimization method as indicated above which is capable to obtain the types and combinations of pieces of input information best suited for the output information automatically within a short period of time.

According to the present invention, this objective is solved for an optimization method as indicated above in that a plural number of input candidate data that can be input data at least to the fuzzy neural network are prepared in advance, using an evolutionary algorithm, information on adoption or non-adoption of at least respective input data are made into a plural number of individuals, and the individuals are made to evolve according to estimated accuracy using the evolutionary algorithm.

Accordingly, it is possible to optimize the number and the types of the input data to at least the fuzzy neural network or fuzzy or neural network.

In order to optimize the value of the coupling weight, it is advantageous when the coupling weight corresponding to the membership function is made into plural number of individuals by coding, and the individuals are made to evolve according to estimated accuracy using the hereditary algorithm.

Although this optimization method is usable to all fuzzy neural networks or fuzzy or neural networks, it is advantageous when the fuzzy neural network is applied to controlling an engine, whereas the input candidate data include those related to the operation state of the engine.

In that case, it is possible to use a plurality of data related to the operation state of the engine as the input candidate data.

According to an advantageous embodiment of the invention, said fuzzy neural network uses six processing layers. In that case, it is advantageous when said fuzzy neural network uses the first through fourth layers for constituting an antecedent portion and fifth and sixth layers for constituting a consequent portion.

In addition, the present invention has the advantage when said fuzzy neural network is used to control an object or an engine, respectively, that said optimization process is carried out during the execution of the control.

However, in case the optimization process has come to an end, it is possible to carry out the learning process.

Other preferred embodiments of the present invention are laid down in further dependent claims.

In the following, the present invention is explained in greater detail with respect to several embodiments thereof in conjunction with the accompanying drawings, wherein:
FIG. 1 is a schematic drawing showing the relationship between an engine 1 and a control device 10 capable of carrying out the air-fuel ratio control employing the optimization method for the fuzzy neural network according to the invention.
FIG. 2 is a schematic block diagram showing the constitution of the control device 10.
FIG. 3 is a schematic block diagram showing the constitution of the engine revolution calculating section.
FIG. 4 is a schematic block diagram showing the constitution of the data processing section.
FIG. 5 is a schematic block diagram showing the constitution of the model base control section.
FIG. 6 shows the internal constitution of the intake air rate estimating section.
FIG. 7 is a flow chart of the optimization process for the fuzzy neural network using a hereditary algorithm.
FIG. 8 is a conceptual diagram showing the relationship between the gene information to be coded in an optimization process and the coded individuals.
FIG. 9 shows the internal constitution of the intake fuel rate estimating section.
FIG. 10 shows the internal constitution of the fuel adhesion rate estimating section.
FIG. 11 shows the internal constitution of the evaporation time constant estimating section.
FIG. 12 shows the internal constitution of the estimated air-fuel ratio calculating section.
FIG. 13 is a schematic block diagram showing the constitution of the target air fuel ratio calculating section.
FIG. 14 is a schematic block diagram showing the constitution of the internal feedback calculating section.
FIG. 15 is a schematic block diagram showing the constitution of the learning signal calculating section.
FIG. 16 is a schematic block diagram of the second embodiment of the control device constituted to carry out the optimization process for the fuzzy neural network during the execution of control under the same conditions as in the first embodiment.
FIG. 17 shows the internal constitution of the data processing section of the second embodiment.
FIG. 18 is a schematic block diagram showing the constitution of the model base control section of the second embodiment.
FIG. 19 is a schematic block diagram showing the constitution of the intake air rate calculating section of the second embodiment.
FIG. 20 is a schematic block diagram showing the constitution of the learning and evaluation signal calculating section of the second embodiment.
FIG. 21 is a conceptual diagram showing another embodiment of the method of generating individuals in the optimization process.
FIG. 22 shows in (a) the input-output relationship of a basic form of the fuzzy neural network, and in (b) and (c) applied forms of the fuzzy neural network.
FIG. 23 shows an example of the fuzzy neural network optimized for estimating the amount of torque variation.
FIG. 24 shows an example of the fuzzy neural network optimized for estimating the engine combustion temperature.
FIG. 25 shows an example of the fuzzy neural network optimized for estimating the intake pipe wall temperature.

Several embodiments of the optimization method for the fuzzy neural network of the invention will be hereinafter described in reference to the appended drawings. The description relates likewise to fuzzy or neural networks.

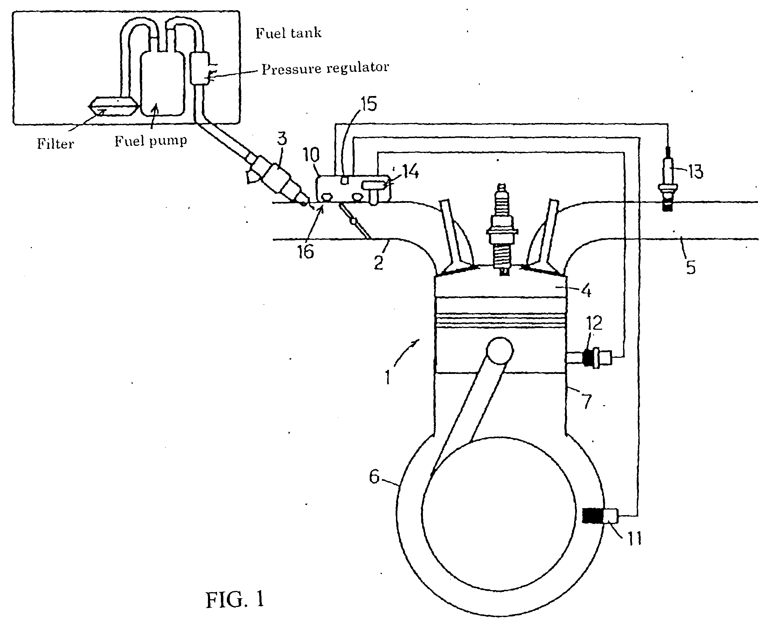

First, a first embodiment of the invention will be described in reference to FIGs. 1 through 15 in which the optimization method for the fuzzy neural network is applied to the control of the air-to-fuel ratio (air-fuel ratio) of an engine.

FIG. 1 is a schematic drawing showing the relationship between an engine 1 and a control device 10 capable of carrying out the air-fuel ratio control employing the optimization method for the fuzzy neural network according to the invention.

The engine I is of the four-cycle type in which mixture is introduced into the combustion chamber of a cylinder 4 through an air cleaner (not shown) and a fuel injection device 3 disposed at an intake pipe 2, and the exhaust gas after combustion is discharged to the atmosphere through an exhaust pipe 5.

The control device 10 controls the air-fuel ratio in the exhaust gas by manipulating the rate of fuel injected from the fuel injection device 3.

The control device 10 is disposed at the intake pipe 2 as shown in FIG. I and constituted as follows: Data are detected with; a crank angle sensor 11 disposed at the crankcase 6, an engine temperature sensor 12 disposed at the cylinder block 7, an air-fuel ratio sensor 13 disposed at the intake pipe 2; an intake pipe vacuum sensor 14, an ambient temperature sensor 15, and an intake pipe wall temperature sensor 16 disposed integrally with (or additionally to) the control device 10; and inputted to the control device 10. The control device 10 receives the input of those data to determine and output the amount of manipulation (namely injection signal) for the fuel injection device 3 and is constituted to carry out learning and evaluation of the internal models that constitute the device.

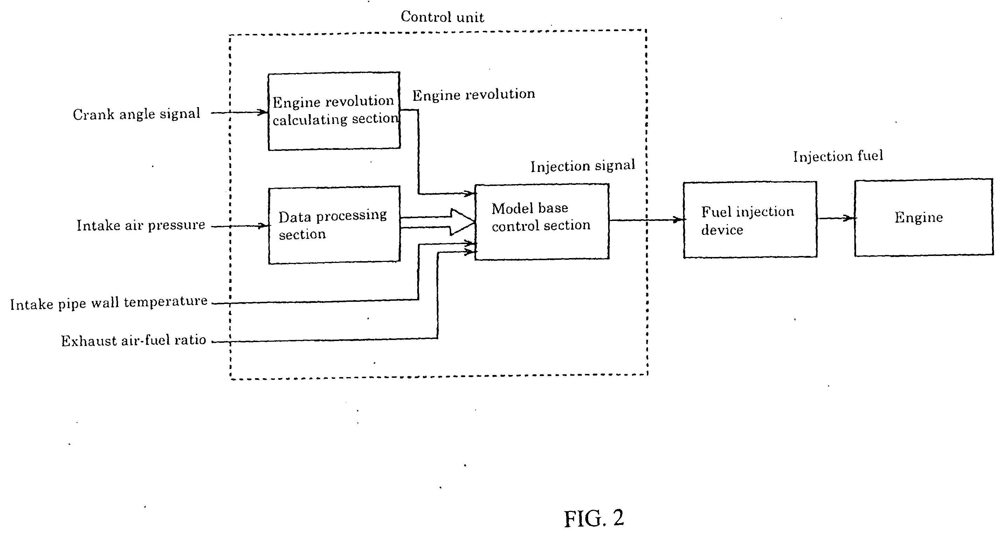

FIG. 2 is a schematic block diagram showing the constitution of the control device 10.

The control device 10 comprises an engine revolution calculating section for calculating the engine revolution based on the crank angle signal taken from the crank angle sensor 11, a data processing section for processing the intake air vacuum information taken from the intake pipe vacuum sensor 14 to make the information usable in a model base control section which will be described later, and the model base control section to which are inputted; data processed in the data processing section, the engine revolution, the intake pipe wall temperature information taken from the intake pipe wall temperature sensor 16, and the exhaust air-fuel ratio taken from the air-fuel ratio sensor 13, for determining the injection signal to be sent to the fuel injection device 3 based on those input data.

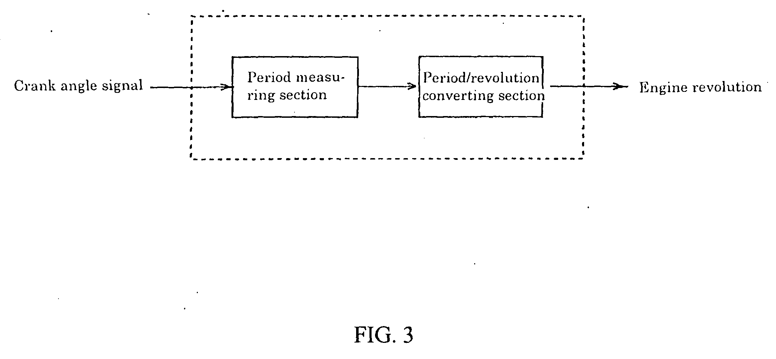

FIG. 3 is a schematic block diagram showing the constitution of the engine revolution calculating section constituted as shown in the figure to measure the period of the crank angle signal with a period measuring section and to convert the period into the engine revolution with a period-to- revolution conversion section.

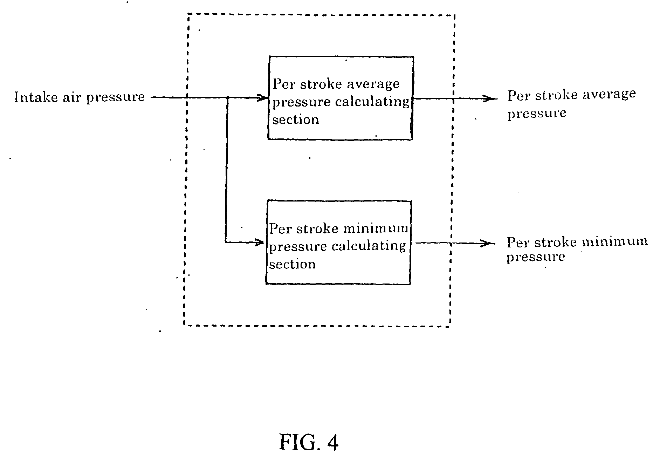

FIG. 4 is a schematic block diagram showing the constitution of the data processing section constituted as shown in the figure to calculate the average pressure per stroke with the per-stroke average pressure calculating section using the intake air pressure data, to calculate the minimum pressure within one stroke with the per-stroke minimum pressure calculating section, and to output those data (the per-stroke average pressure and the per-stroke minimum pressure).

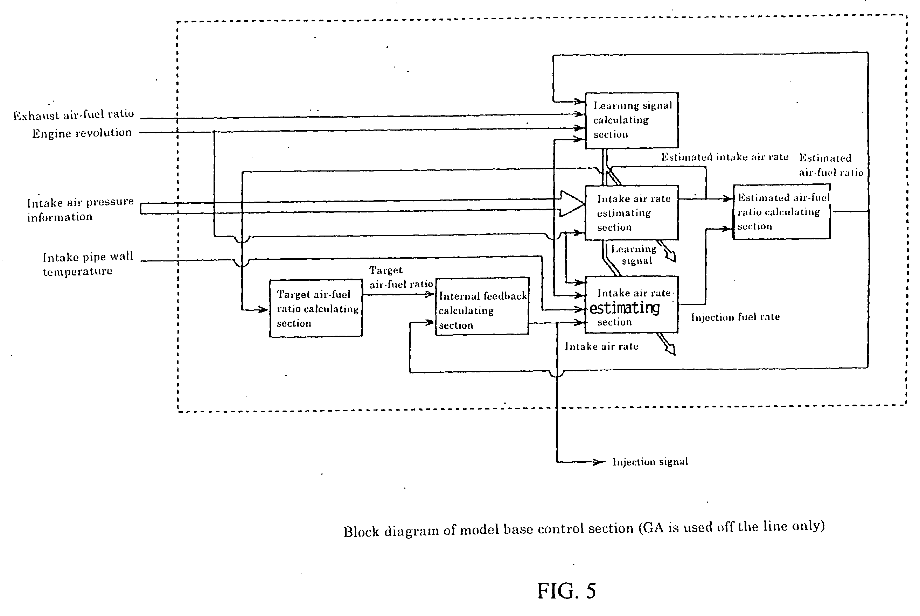

FIG. 5 is a schematic block diagram showing the constitution of the model base control section.

As shown in the figure, the model base control section comprises an intake air rate estimating section constituting an air system sequence model made by assuming the behavior of air in the intake pipe as a model, an intake fuel rate estimating section constituting a fuel system sequence model made by assuming the behavior of fuel injected from the fuel injection device as a model, and an estimated air-fuel ratio calculating section for calculating the estimated airfuel ratio based on the estimated intake air rate and the estimated intake fuel rate respectively estimated with the intake air rate estimating section and the intake fuel rate estimating section.

The model base control section further comprises a target air-fuel ratio calculating section for calculating a target air-fuel ratio based on the estimated intake air rate, and an internal feedback calculating section which calculates the injection fuel rate for the fuel injection device (namely injection signal to the fuel injection device) based on the target air-fuel ratio and the estimated air-fuel ratio, and outputs the result to the fuel injection device of the engine and to the intake fuel rate estimating section.

The model base control section further comprises a learning signal calculating section to which are inputted the estimated air-fuel ratio, estimated intake air rate, actual exhaust air-fuel ratio, and engine revolution; for calculating the learning data for the intake air rate estimating section and the intake fuel rate estimating section based on those input data.

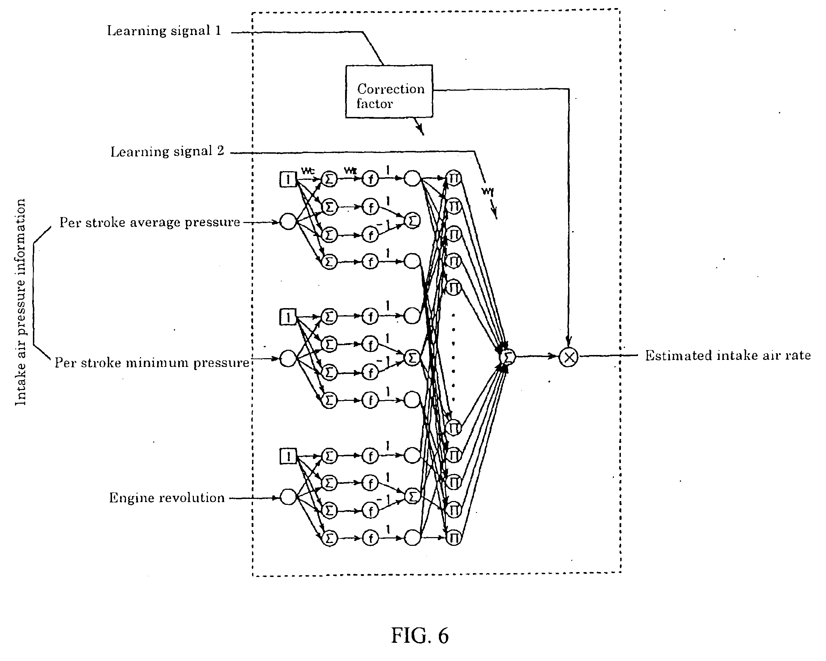

FIG. 6 is a schematic block diagram showing the internal constitution of the intake air rate estimating section.

As shown in the figure, the intake air rate estimating section comprises a fuzzy neural network to which are inputted the engine operation state data (average intake air pressure and the minimum intake air pressure per-stroke, and the engine revolution) other than the intake air rate which is the subject of sensing, and outputs the estimated value of the intake air rate which is the subject of sensing.

This fuzzy neural network comprises six processing layers, with the first through fourth layers constituting an antecedent portion and the fifth and sixth layers constituting a consequent portion.

Pieces of input information are divided into the membership functions, each defined with the equation shown below and constituting the antecedent portion including the first through fourth layers, using the parameter wc representing the central position and the parameter wg representing the gradient of the sigmoid function as coupling factors.$\text{f(x) = 1/1 + exp(-wg(xi + wc))}$

The consequent portion is divided into fuzzy rules corresponding in number to the number of membership functions of the antecedent portion. The outputs of the fuzzy rules are respectively expressed with coupling weights wf. A sum of products of respective outputs and the grades of the antecedent portion membership functions are calculated and the resultant value is outputted as an estimated value produced with the center of gravity method of the fuzzy inference, namely as an estimated intake air rate.

In the fuzzy neural network constituting the above-described intake air rate estimating section, the number and types of the input information, the coupling weights wo and wg representing the central position and gradient of the membership function, and the number of membership functions corresponding to respective input information data are optimized with a hereditary algorithm using those information data as genes, while taking the relationship with the consequent portion coupling weight wf into consideration.

During the execution of the control, the coupling weight wf is made learnable based on the learning signal 2 calculated in the learning signal calculating section, and a correction factor for the output (estimated intake air rate) of the fuzzy neural network is also made learnable based on the learning signal 1 calculated in the learning signal calculating section. The above-mentioned correction factor is used to correct the output of the fuzzy neural network according to changes in the environment as when running on a slope.

Here will be described the optimization process using the hereditary algorithm in which the number and types of input information to the fuzzy neural network constituting the intake air rate estimating section, and the values of the coupling weights wc and wg representing the central position and the gradient of the membership function are determined.

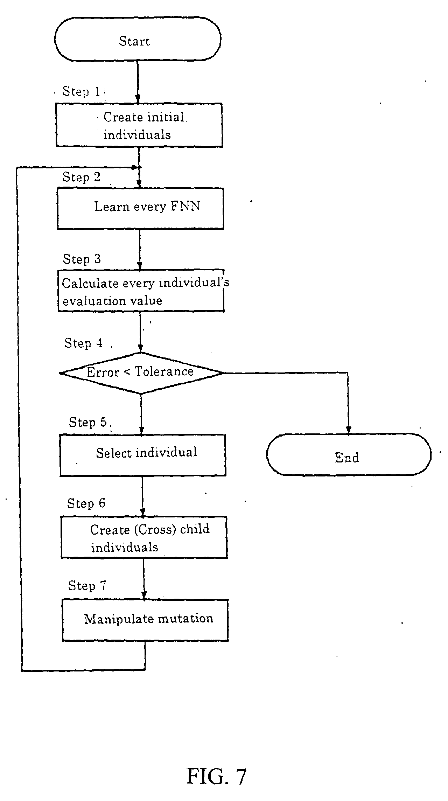

FIG. 7 is a flow chart of the optimization process of the fuzzy neural network using the hereditary algorithm.

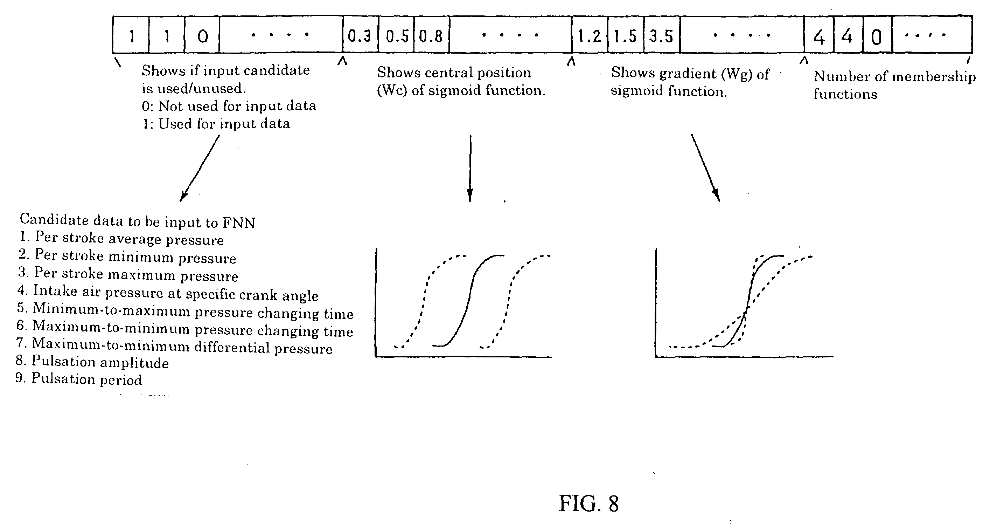

First, as shown in FIG. 8, the number and types of input information in the fuzzy neural network constituting the intake air rate estimating section, the coupling weights wc and wg representing the central position and the gradient of the membership function, and the number of the membership functions are coded as genes to produce a first generation consisting of a plural number (100 for example) of individuals (step 1).

Here, a plural number of input candidate data for use as the input information to the fuzzy neural network are prepared in advance. The data denoting whether the input candidate data is used or unused (in this embodiment, "0" denotes "unused" and "I" denotes "used") is used as a gene. As the input candidate data for estimating the intake air rate, the following can be considered for example; the average intake air pressure per stroke, minimum intake air pressure per stroke, maximum intake air pressure per stroke, intake air pressure at a specific crank angle, period of time in which the intake air pressure changes from the minimum to the maximum, period of time in which the intake air pressure changes from the maximum to the minimum, differential pressure between the minimum and maximum pressures, intake air pulsation amplitude, period (interval) of the intake air pulsation and so on. Since these data are checked for their suitability as the input information with the optimization process, the data may be of any type as long as they can be detected or processed.

The information on the number, to be coded as a gene, of a membership function can be prepared so as to correspond to the input information.

Next, the input information and the coupling factor of the fuzzy neural network are fixed with one of the individuals produced in the step 1, the estimated value of the intake air rate is determined with the fuzzy neural network, the actual intake air rate is detected with a sensor such as an air flow meter, and learning of the consequent portion coupling weight wf is carried out for a specified number of times with the back propagation (BP) method so as to reduce the difference between the estimated and the actually measured values, namely to improve the estimation accuracy (step 2).

After applying the process of the step 2 to all the individuals, an evaluation value is calculated according to the error between the estimated and measured values for each of the individuals (step 3).

After calculating the evaluation values for all the individuals, determination is made whether the error of the individual of the highest evaluation (elite individual) is smaller than a tolerance value (step 4). If the error is smaller than the tolerance value, the fuzzy neural network is determined as being optimized, and the optimization process is finished. The input information and the coupling factor of the fuzzy neural network are fixed with the genes constituting the elite individual.

In the case the error is greater than the tolerance value as determined in the step 4, the fuzzy neural network is determined as not being optimized, and two parent individuals are selected from the first generation individuals so as to produce the next generation (step 5). The selection of the parent individuals may be carried out by the roulette choice in which an individual having a higher evaluation value has a higher probability of being selected as the parent individual.

When the parent individuals are selected, the selected parent individuals are made to cross each other to reproduce a plural number of child individuals as the second generation (step 6). Incidentally, the mutual crossing of the parent individuals may be carried out by methods such as one-point crossing, two-point crossing, normal distribution crossing, and so on. By the way, when the number of the first generation individuals is 100, it may be arranged that the number of the child individuals produced by the crossing of the parent individuals is 99 to which the elite individual of the first generation is added to produce 100 second generation individuals. Leaving the previous generation individual intact to the next generation as described above provides an effect of shortening the time required for the optimization.

In still another step, mutation is caused to the genes by changing the values of the genes at random at a certain probability for the plural number of child individuals produced (step 7).

After producing the second generation by the above-described process, the optimization process from the step 2 is repeated again.

The above-described optimization process is repeated until the error between the estimated value (output from the fuzzy neural network) and the actually measured value of the intake air rate becomes smaller than the tolerance value. As a result, the input information and coupling factor most suited for estimating the intake air rate are automatically determined.

Here, description returns to the constitution of the processing sections of the model base control section.

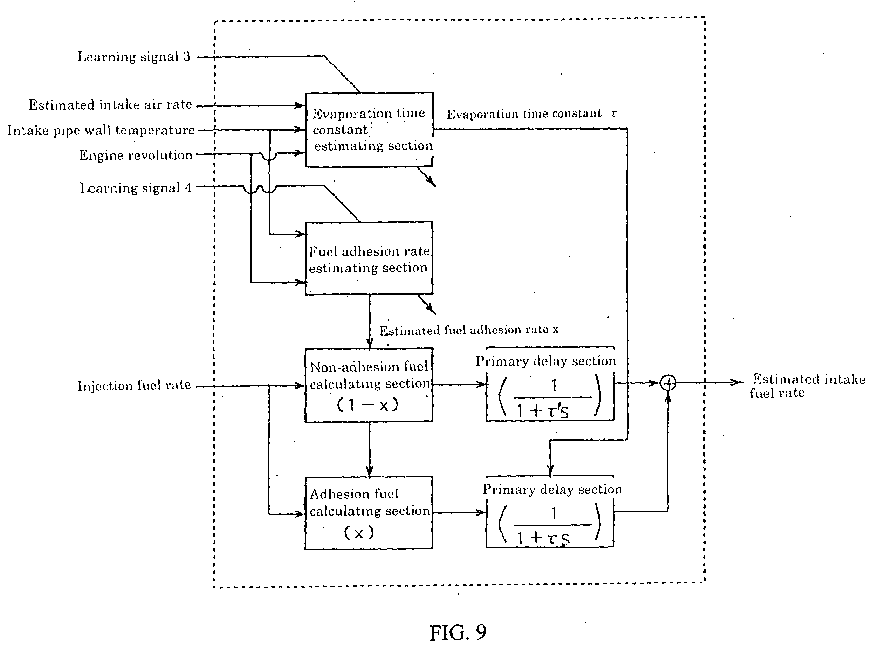

FIG. 9 shows the internal constitution of the intake fuel rate estimating section.

In the intake fuel rate estimating section, the behavior of the fuel injected from the fuel injection device is represented with a model consisting of the rate of the injected fuel that does not directly enter the interior of the cylinder but adheres to the intake pipe wall, the intake valve, etc. (hereinafter referred to as the fuel adhesion rate x) and the speed at which the fuel that has adhered to the intake pipe wall, the intake valve, etc. evaporates (hereinafter referred to as the evaporation time constant r). With the above -described arrangement, the intake fuel rate estimating section estimates the fuel entering the cylinder based on the fuel injection rate inputted from the internal feedback calculating section, the fuel adhesion rate, and the evaporation time constant. To achieve the above-described function, the intake fuel rate estimating section comprises a fuel adhesion rate estimating section, an evaporation time constant estimating section, a non-adhesion fuel calculating section, an adhesion fuel calculating section, and an evaporation fuel rate calculating section.

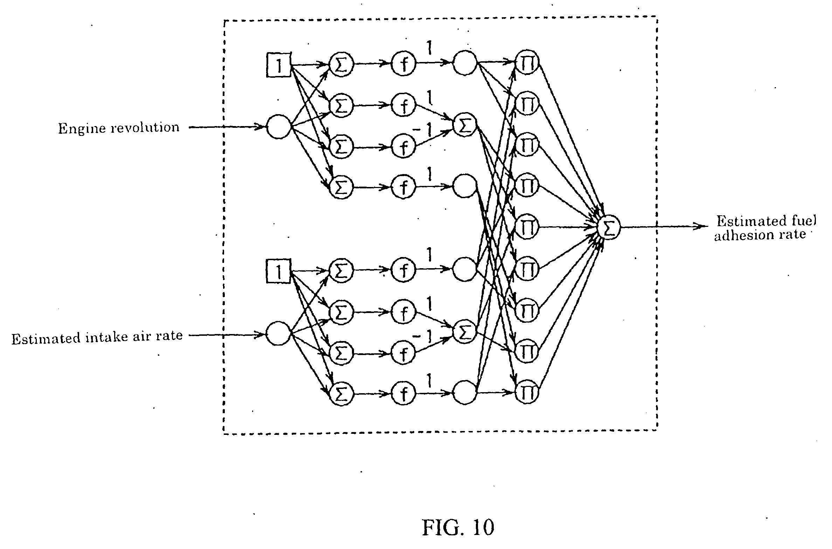

The fuel adhesion rate estimating section as shown in FIG. 10 comprises a fuzzy neural network which receives the input data of the engine operation state (the engine revolution and the estimated intake air rate) other than the fuel adhesion rate to sense, and outputs the fuel adhesion rate to be sensed.

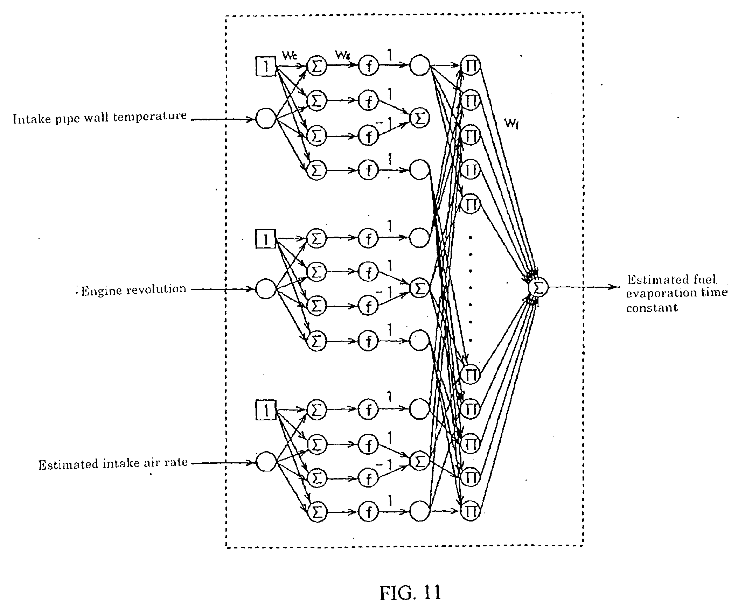

The evaporation time constant estimating section as shown in FIG. 11 comprises a neural network which receives the input data of the engine operation state (the intake pipe wall temperature, the engine revolution, and the estimated intake air rate) other than the evaporation time constant to sense and outputs the estimated value of the evaporation time constant to be sensed.

The fuzzy neural network constituting the fuel adhesion rate estimating section and the evaporation time constant estimating section, as well as the above-described fuzzy neural network constituting the intake air rate estimating section, comprises six processing layers, with the first through fourth layers constituting the antecedent portion using as coupling factors the parameter wc representing the central position and the parameter wg representing the gradient of the sigmoid function, and with the fifth and sixth layers constituting the consequent portion using as coupling weights the outputs wf of the nine fuzzy rules corresponding to the number of the membership functions of the antecedent portion. With the above-described constitution, a sum of products of the grades of the membership functions and the corresponding coupling weights wf is determined and the result is outputted as the value estimated with the barycentric method of fuzzy inference, namely the estimated fuel adhesion rate and the estimated fuel evaporation time constant.

The number and types of the input information, and the values of the coupling weights wc and wg representing the central position and the gradient of the membership function in the fuzzy neural network can be determined by the optimization process according to the hereditary algorithm while taking into consideration the relationship with the consequent portion coupling weight wf. The coupling weight wf constituting the consequent portion is constituted to be learnable with the learning signals 3 and 4 obtained with the learning signal calculating section during the execution of the control.

The non-adhesion fuel calculating section calculates the rate of fuel entering the combustion chamber of the cylinder directly from the fuel injection device according to the estimated fuel adhesion rate x obtained from the fuel adhesion rate estimating section and to the fuel injection rate obtained from the internal feedback calculating section.

The adhesion fuel calculating section calculates the rate of fuel injected from the fuel injection device and adhering to the intake pipe wall, the intake valve, etc. according to the estimated fuel adhesion rate x obtained from the fuel adhesion rate estimating section and to the fuel injection rate obtained from the internal feedback operation section.

The first evaporation fuel rate calculating section calculates the rate of fuel evaporating from the fuel adhering to the intake pipe wall, the intake valve, etc. based on the evaporation time constant r estimated with the evaporation time constant estimating section and on the adhesion fuel rate obtained with the adhesion fuel rate calculating section.

The second evaporation fuel rate calculating section calculates the rate of the fuel from the fuel injection device evaporating before directly entering the combustion chamber of the cylinder based on the predetermined evaporation time constant τ'. Incidentally, since the time constant τ' for the fuel directly entering the cylinder is very small, and its influence is very small, here it is assumed as an appropriate constant.

The intake fuel rate estimating section calculates and outputs the estimated value of the intake fuel rate by the processes in the above-described processing sections.

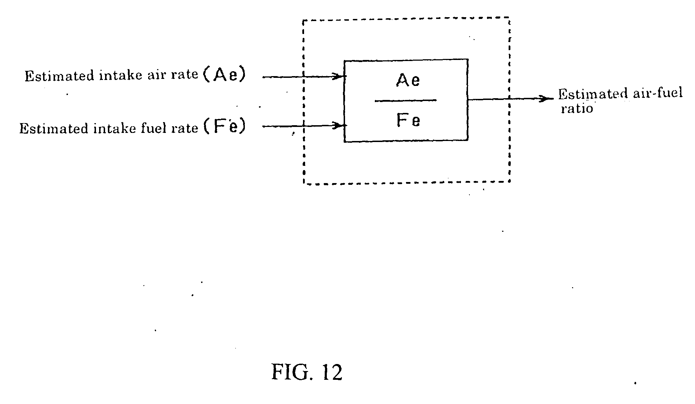

Based on the estimated intake air rate Ae and the estimated intake fuel rate Fe respectively obtained from the intake air rate calculating section and the intake fuel rate calculating section constituted as described above, the estimated air-fuel ratio calculating section as shown in FIG. 12 calculates the estimated air-fuel ratio Ae/Fe.

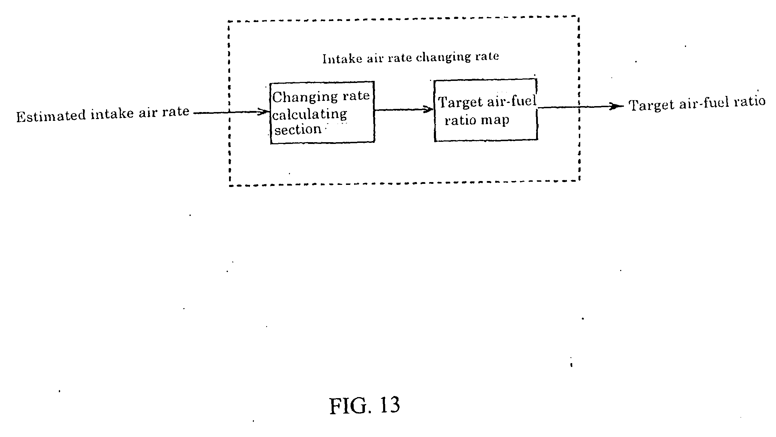

FIG. 13 is a schematic block diagram showing the constitution of the target airfuel ratio calculating section.

The target air-fuel ratio calculating section comprises a changing rate calculating section for calculating the rate of change in the estimated intake air rate and a map of the target air-fuel ratio versus the changing rate, receives input of the estimated intake air rate obtained from the intake air rate estimating section, and outputs the target air-fuel ratio commensurate with the estimated intake air rate.

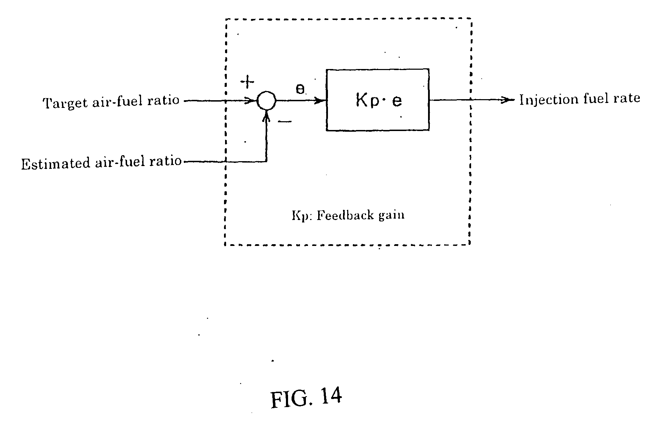

FIG. 14 is a schematic block diagram showing the constitution of the internal feedback operation section. As shown in the figure, the internal feedback operation section determines the fuel injection rate so that the error of the estimated fuel-air ratio obtained from the estimated air-fuel ratio calculating section relative to the target air-fuel ratio obtained from the target air-fuel ratio calculating section becomes smaller, and outputs the determined value to the fuel injection device and to the intake fuel estimating section. In FIG. 14, the symbol Kp denote the feedback gain.

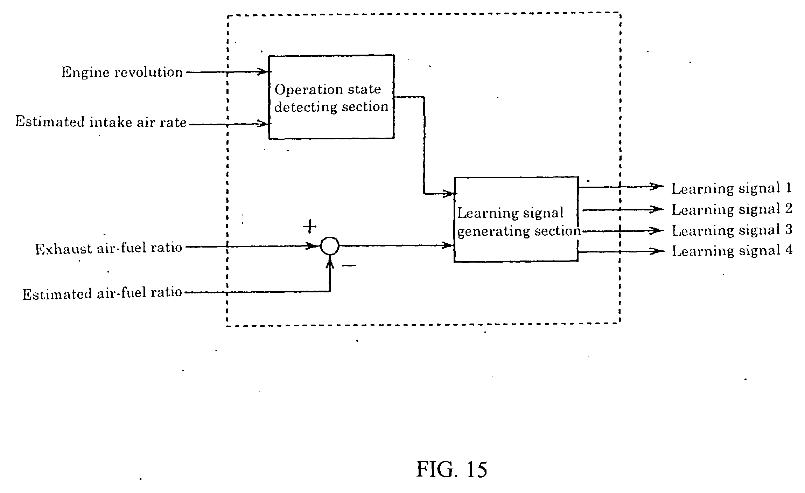

FIG. 15 is a schematic block diagram showing the constitution of the learning signal calculating section.

As shown in the figure, the learning signal calculating section comprises an operation state detecting section and a learning signal generating section. The operation state detecting section receives the input data of engine revolution and estimated intake air rate and, based on those data, detects the current engine operation state (for example a transient state or a stationary state).

The learning signal generating section receives the input data of the error of the estimated air-fuel ratio relative to the actually measured exhaust air-fuel ratio, and determines the learning signals 1 through 4 so that the error becomes smaller.

Here, since the learning signals 1 and 2 are for the intake air rate calculating section, they are calculated from the information obtained when the engine operation state is stationary. Since the learning signals 3 and 4 are for the intake fuel rate calculating section, they are calculated from the information obtained when the engine operation state is transient.

Furthermore, since the learning signal 1 is for the correction factor for correcting the output of the fuzzy neural network according to changes in the environment such as during the upward slope run as described before, it is issued in succession according to changes in the environment during the stationary state with a large gain. However, since the learning signal 2 is for the consequent portion coupling factor wf of the fuzzy neural network, whether it should be issued or not is determined according to the tendency of the output value of the learning signal 1 so as to avoid response to the error due to changes in the environment. Actually, the learning signal I is continuously on the increase during the upward slope run while it is on the decrease during the downward slope run. In such cases, the environment is deemed to be changing, and the learning with the learning signal 2 is not carried out.

When there is no change in the environment, learning is carried out with both of the learning signals 1 and 2. However, it is arranged that the gain is larger for the learning using the learning signal 1 than for the learning of the fuzzy neural network (FNN) using the learning signal 2.

When the output of the learning signal 2 is determined according to the tendency of the output of the learning signal 1 as described above, the consequent portion coupling factor of the fuzzy neural network does not change in response to the environmental changes. As a result, unnecessary learning is not carried out and therefore, the output of the fuzzy neural network becomes stabilized.

The first embodiment described above is constituted that the input information and the antecedent portion coupling factors of the fuzzy neural networks of respective estimating sections of the model base control section are optimized in advance with the hereditary algorithm while taking into consideration the relationship with the consequent portion coupling weight wf and that only the learning of the consequent portion coupling weight wf is carried out during the execution of the control. However, the optimization of the fuzzy neural network is not limited to the first embodiment but may be constituted to be carried out during the execution of the control.

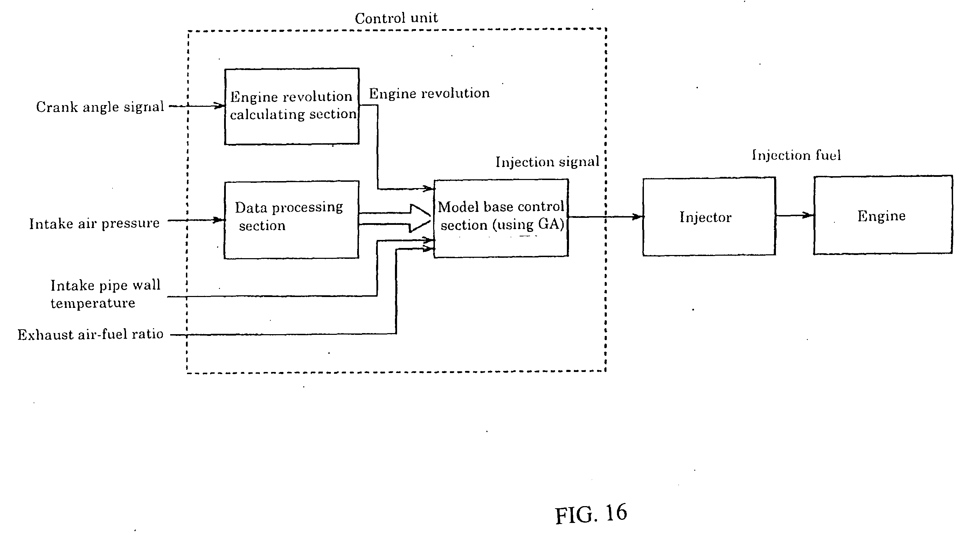

FIG. 16 is a schematic block diagram showing the constitution of the control device as a second embodiment constituted to carry out the optimization process of the fuzzy neural network during execution of the control under the same conditions as those of the first embodiment. In the following, only the processing sections that are different from those in the first embodiment are explained, and explanation of other processing sections is omitted.

The model base control section is constituted that the optimization process of the fuzzy neural network constituting its intake air rate estimating section can be carried out during the execution of the control.

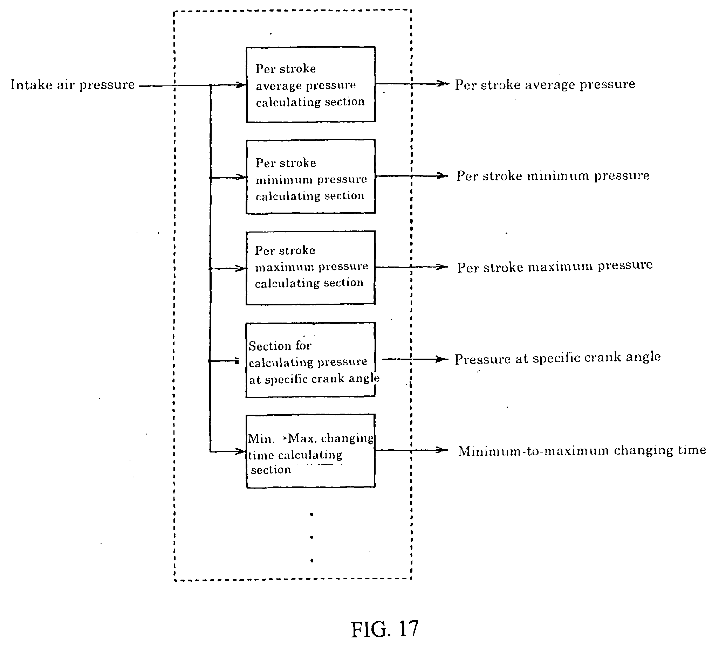

The data processing section as shown in FIG. 17 processes the intake air pressure data to produce input candidate data for the fuzzy neural network constituting the intake air rate estimating section in the model base control section.

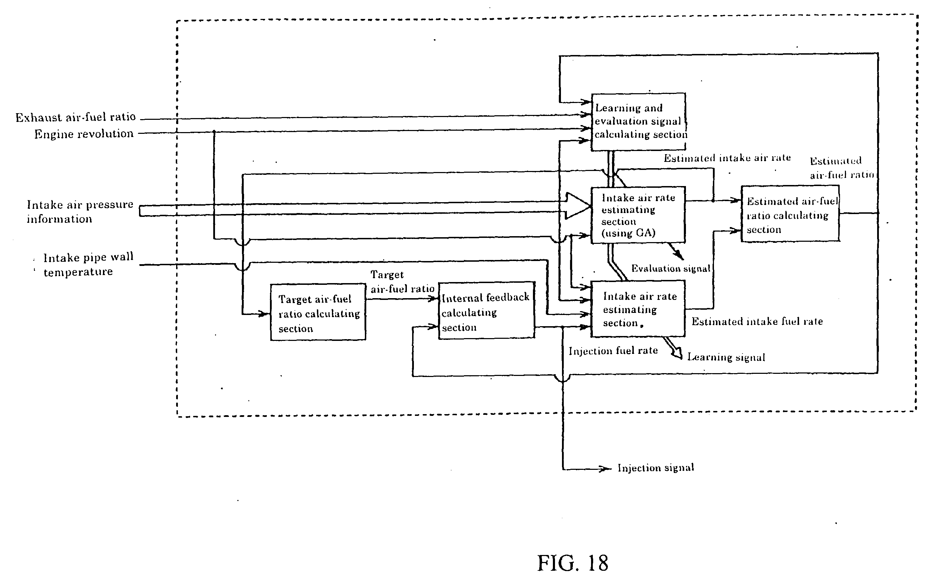

FIG. 18 is a schematic block diagram showing the constitution of the model base control section. As described before, the intake air rate estimating section comprises a fuzzy neural network that uses the input information data other than the sensing subject and outputs the intake air rate to be sensed, and is constituted to carry out the optimization process of the fuzzy neural network during the execution of the control. The learning and evaluation signal calculating section calculates and outputs, in addition to the learning signals for the fuzzy neural network of the intake fuel rate calculating section and the intake air rate calculating section, evaluation signals to be used for the optimization process in the intake air rate calculating section.

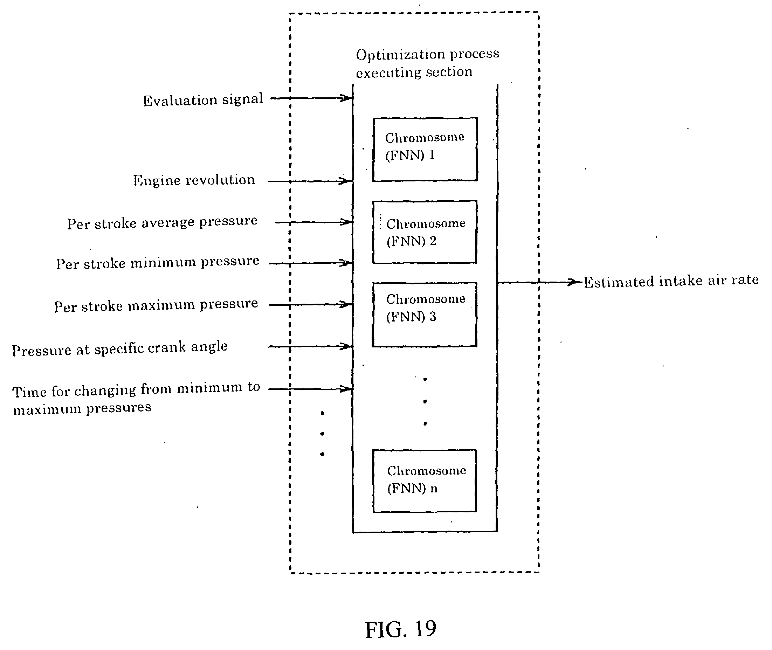

FIG. 19 is a schematic block diagram showing the constitution of the intake air rate calculating section. As shown in the figure, the intake air rate calculating section comprises an optimization process executing section which receives the input of various input candidate data including the data processed in the data processing section and generates by coding the input data a plural number of individuals (chromosomes) using the data denoting whether the input candidate data are used or unused (in this embodiment, "0" stands for "unused" and "1" for "used") and the antecedent portion coupling weights we and wg as genes. The fuzzy neural network is optimized while selecting from among the individuals according to the evaluation signals obtained from the learning and evaluation signal calculating section. Since the optimization process using the hereditary algorithm is basically the same as that of the first embodiment, explanation thereof is omitted.

The optimization process in the intake air rate estimating section is started at appropriate time intervals, or when a specified condition is met, or by a direct instruction by a user. When the optimization process is not being carried out, a learning process can be carried out with the learning signal obtained from the learning and evaluation signal calculating section, like the intake air rate estimating section explained with the first embodiment.

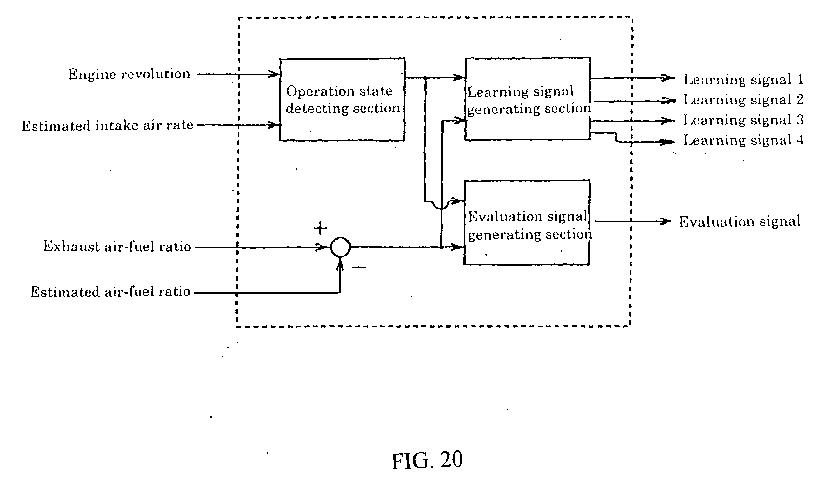

FIG. 20 is a schematic block diagram showing the constitution of the learning and evaluation signal calculating section.

The learning and evaluation signal calculating section, like that of the first embodiment, when the optimization process is not carried out in the intake air rate estimating section, calculates and outputs the learning signals I and 2 for the intake air rate estimating section or the learning signals 3 and 4 for the intake fuel rate estimating section according to the operation state of the engine.

When the optimization process is being carried out in the intake air rate estimating section, evaluation signals of respective individuals, in addition to the above-described learning signals 1 through 4, are outputted from the evaluation signal generating section according to the error between the estimated and measured values of the air-fuel ratio.

In the intake air rate estimating section, during the optimization process, learning of the consequent portion coupling weight wf is carried out when the fuzzy neural network is being operated using respective individuals according to the learning signal 2 outputted from the learning and evaluation signal calculating section, and determines the evaluations of respective individuals according to the evaluation signals.

In the first and second embodiments describe so far, whether the optimization process is at its end is determined according to whether the output error of the fuzzy neural network is smaller than the tolerance value. However, the condition of the end determination is not limited to that in the above embodiments. It may also be arranged that the process is repeated for a predetermined number of generations, or that the evolution is stopped when the decreasing tendency of the output error is deemed to be converging.

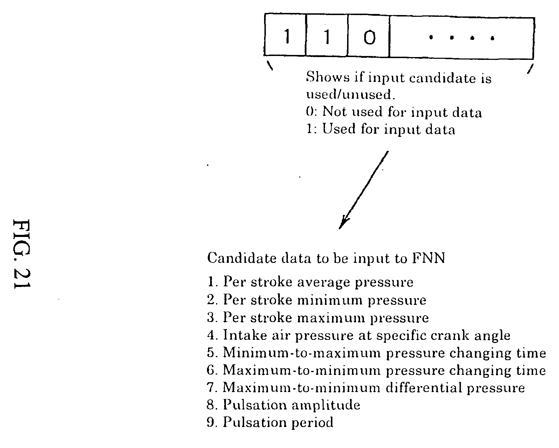

In the embodiments described above, both of the input information and the membership function of the fuzzy neural network are optimized using the hereditary algorithm. However, this invention is not limited to the above embodiments and may also be embodied otherwise: As shown in FIG. 21, only the types and the number of the input information as genes are coded and optimized by the hereditary algorithm. The membership function is optimized, as proposed by the applicant's Japanese patent application No. Hei-9-91115, by adding fuzzy rules using the changing tendency of the coupling factor and the decreasing tendency of the error of the fuzzy neural network in the learning process as decision criteria. At the same time, using the lineality of the consequent portion coupling weights of at least three membership functions in the same input information as the decision criteria, when the coupling factors have lineality, at least one of the membership functions corresponding to the consequent portion weights is deleted.

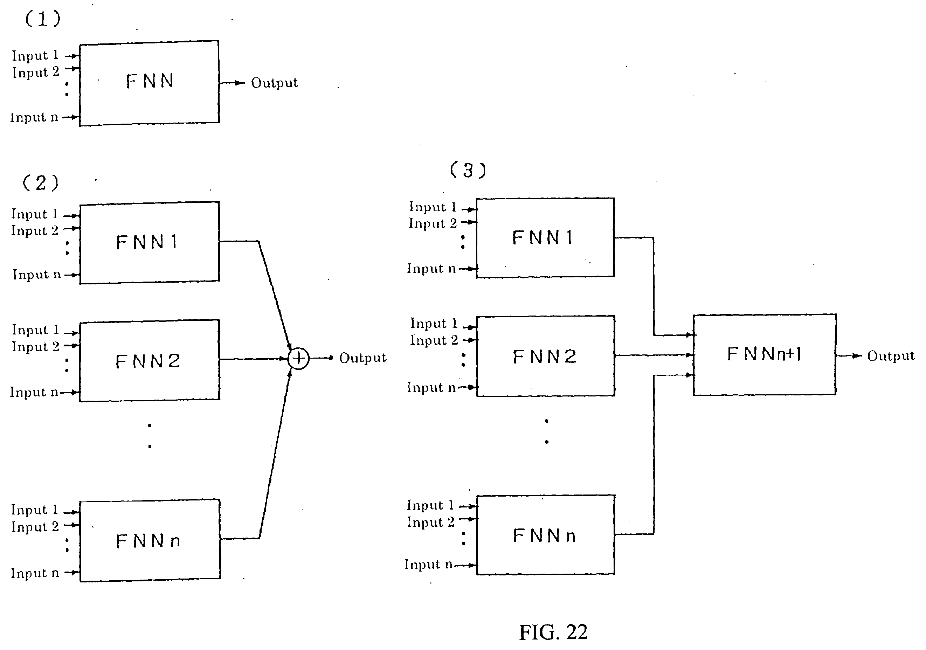

Furthermore in the above-described embodiments, while the fuzzy neural network of each estimating section is constituted with the basic form fuzzy neural network as shown in FIG. 22(1), the constitution of the fuzzy neural network is not limited to such an embodiment, but may be constituted otherwise as shown in FIGs. 22(2) or 22(3) in which outputs of a plural number of fuzzy neural networks are summed up and outputted, or outputs of a plural number of fuzzy neural networks are further used as input data to another fuzzy neural network which in turn outputs data. Even if the fuzzy neural network is constituted in the complicated manner as described above, effects are still provided that the selection of input information and that determination of respective coupling factors are made in a simple manner.

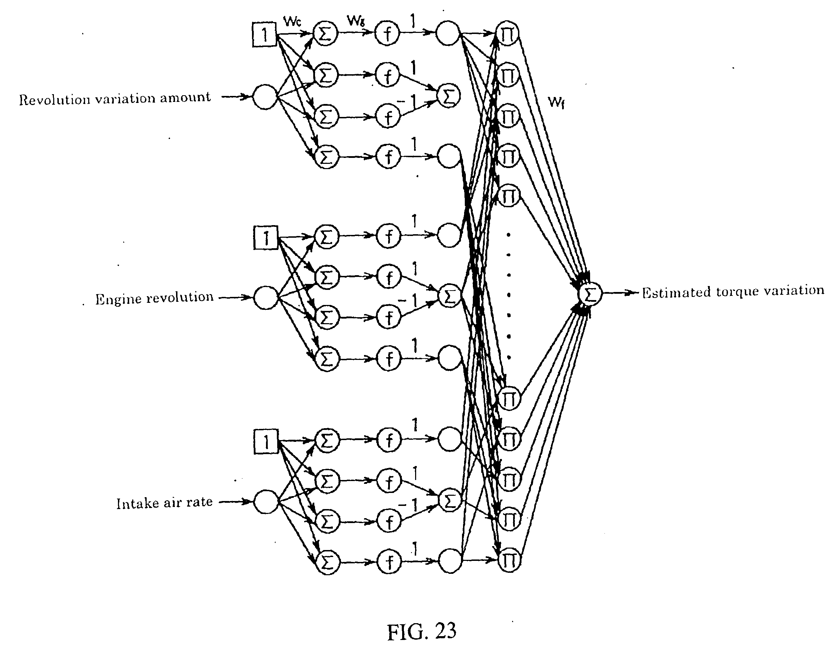

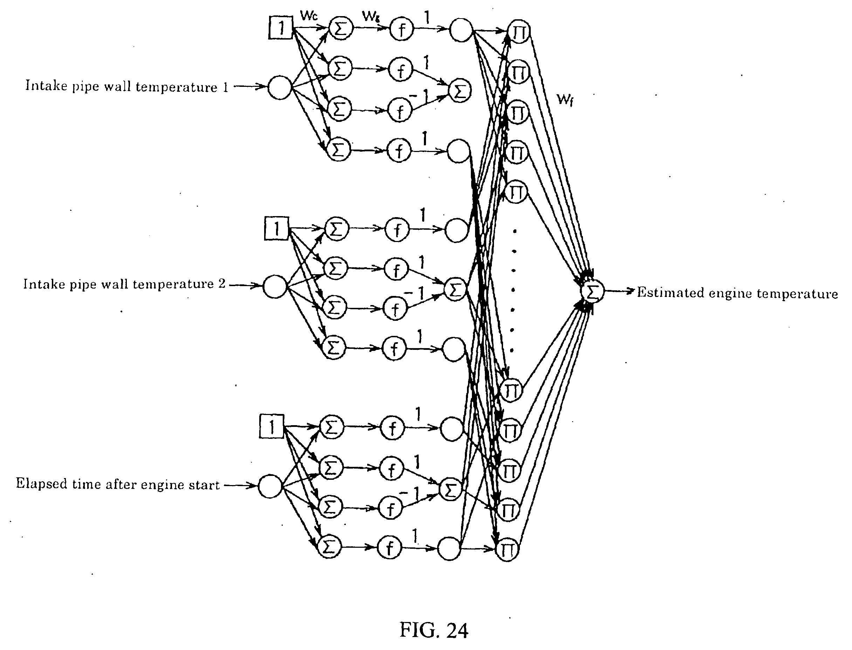

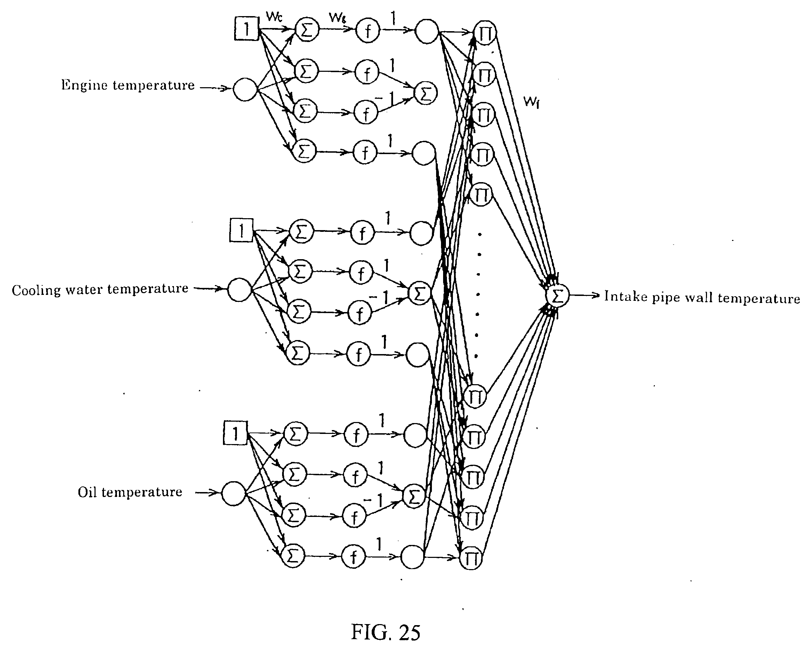

Furthermore, while the above embodiments are described with the example of the fuzzy neural network optimized by using the information on the engine operation state other than the intake air rate, fuel adhesion rate, or evaporation time constant as input candidate data in order to estimate the sensing subject, the input candidate data for the fuzzy neural network are not limited to those used in the above embodiments. Rather, it is a matter of course that the input candidate data may be set at will according to the sensing subject. For example, in the case the amount of variation in torque as the detection subject is to be estimated, the fuzzy neural network may be optimized using time sequential data or the like of the amount of variation in revolution, engine revolution, intake air rate, and combustion chamber pressure as the input candidate information (as shown in FIG. 23 as an example of a fuzzy neural network optimized for estimating the amount of torque variation). Furthermore, in the case the combustion chamber temperature as the sensing subject of an engine is to be estimated, the fuzzy neural network may be optimized using the intake pipe wall temperature, intake pipe ambient temperature (atmospheric temperature), and the time elapsed after starting the engine as the input candidate information (as shown in FIG. 24 as an example of a fuzzy neural network optimized for estimating the combustion chamber temperature of the engine). Furthermore, in the case the intake pipe wall temperature as the sensing subject is to be estimated, the fuzzy neural network may be optimized using the cooling water temperature, oil temperature, and the engine (cylinder block) temperature as the input candidate information (as shown in FIG. 25 as an example of a fuzzy neural network optimized for estimating the intake pipe wall temperature).

In the first and second embodiments described above, since the description is made with an intake pipe injection type of engine, the intake air rate estimated in the intake air rate estimating section of the control device is the rate of the intake air flowing though the throttle valve. However, in the case the air-fuel ratio in an incylinder injection type of engine is controlled in the same manner, the fuzzy neural network may be constituted so that the rate of intake air flowing into the cylinder is estimated instead of the rate of intake air flowing through the throttle valve.

In the first and second embodiments described above, since the description is made with the control of the air-fuel ratio of the engine as an example of the optimization method for the fuzzy neural network according to the invention, both of the input candidate data and the output data are related to the air-fuel ratio control for the engine. However, the subject of control to which the optimization method of the invention may be applied is not limited to the air-fuel ratio in the engine. The method may also be applied to any subject of control as a matter of course.

Specifically for example, in the case a vehicle is to be controlled in many aspects as reflecting the preference of the user, for example, a fuzzy neural network for estimating the preference of the user for the vehicle may be optimized using input candidate data such as the amount of operating the accelerator or brake, shift travel, or pattern of change in the engine revolution.

Furthermore, in the case the subject of control is to be controlled in many aspects as reflecting the emotion or character of the user, a fuzzy neural network for estimating the emotion or character of the user may be optimized using input candidate data such as the facial expression, manipulation, speech, or physical movement of the user.

In the case the speed of an electric motor-operated vehicle is to be controlled, a fuzzy neural network for estimating the vehicle speed may be optimized using input candidate data such as the induced voltage of the motor, revolution, angular speed, or current of the motor.

In the case the amount of electricity generated with a generator is to be controlled, a fuzzy neural network for estimating the required amount of electric power for consumption may be optimized using input candidate data such as the season, and the weather of the day.

Furthermore, in the case the engine of an outboard motor with a water pump operated in connection with the engine crankshaft is controlled, a fuzzy neural network for estimating the engine temperature may be optimized using input candidate data such as the in-flow cooling water temperature, out-flow cooling water temperature, engine revolution, or continuous operation time as the input candidate data.

As described above, in the optimization method for a fuzzy neural network of this invention, the process of calculating an inference value by fuzzy inference is constituted with a neural network, a parameter to be identified or adjusted by fuzzy inference is made to correspond to the coupling weight of the neural network, and a fuzzy rule and/or membership function is adjusted by updating the coupling weight by learning, and that at least a plural number of input candidate data that can be input data to the fuzzy neural network are prepared in advance, using a hereditary algorithm, at least information on adoption or non-adoption of respective input data are made into a plural number of individuals, and the individuals are made to evolve according to estimated accuracy using a hereditary algorithm, so that at least the number and the types of the input data to the fuzzy neural network are optimized. Therefore, an effect is provided that optimum types and number of input data for estimating the output information from among detectable pieces of information may be automatically selected within a short period of time and that a fuzzy neural network of a higher estimation accuracy may be constituted.

Furthermore, the output of the fuzzy neural network is made to be the data of the detection subject required for control, and the input candidate data for the fuzzy neural network are made to be those of the operation state of the engine that are not the sensing subject. As a result, for example, information that is difficult to sense directly or requires an expensive sensor to sense directly may be estimated indirectly. This results in the effects that a broad range of information can be used for the control and that the control device itself is made inexpensive because no expensive sensors are required. Furthermore, the use of the fuzzy neural network enables comprehensive use of a plural number of data. Since its input information may be optimized, a fuzzy neural network that is invulnerable to external disturbances may be constituted even in the case the detection subject data are estimated from other data.

## Claims

1. An optimization method for a fuzzy neural network or fuzzy or neural network, wherein the process of calculating an inference value by fuzzy inference is constituted with a neural network, a parameter to be identified or adjusted by fuzzy inference is made to correspond to the coupling weight of the neural network, and a fuzzy rule and/or membership function is adjusted by updating the coupling weight by learning,
**characterized in that**
a plural number of input candidate data that can be input data at least to the fuzzy neural network are prepared in advance, using an evolutionary algorithm, information on adoption or non-adoption of at least respective input data are made into a plural number of individuals, and the individuals are made to evolve according to estimated accuracy using the evolutionary algorithm.

2. An optimization method for a fuzzy neural network according to claim 1, **characterized in that** the coupling weight corresponding to the membership function is made into plural number of individuals by coding, and the individuals are made to evolve according to estimated accuracy using the hereditary algorithm.

3. An optimization method for a fuzzy neural network according to claim 1 or 2, **characterized in that** the fuzzy neural network is applied to controlling an engine, and the input candidate data include those related to the operation state of the engine.

4. An optimization method for a fuzzy neural network according to claim 3, **characterized in that** the input candidate data include at least one of a plural number of data related to the intake air pressure of the engine, and output data is the intake air rate to the cylinder of the engine.

5. An optimization method for a fuzzy neural network according to claim 3 or 4, **characterized in that** the input candidate data include at least one of the time sequential data of the combustion chamber pressure, the fluctuation in the engine revolution, the engine revolution, and the intake air rate, and the output data is the amount of fluctuation in the engine torque.

6. An optimization method for a fuzzy neural network according to at least one of the preceding claims 3 to 5, **characterized in that** the input candidate data include at least one of the intake pipe wall temperature of the engine, the ambient temperature of the intake pipe, and the elapsed time from the start of the engine, and the output data is the temperature of the combustion chamber of the engine.

7. An optimization method for a fuzzy neural network according to at least one of the preceding claims 3 to 6, **characterized in that** the input candidate data include at least one of the cooling water temperature, the oil temperature, and the engine temperature, and the output data is the intake pipe wall temperature.

8. An optimization method for a fuzzy neural network according to at least one of the preceding claims 3 to 7, **characterized in that** the input candidate data include at least one of the intake pipe wall temperature, the engine revolution, the intake air rate, and the intake air vacuum, and the output data is the evaporation time constant of the fuel adhering to the intake pipe wall.

9. An optimization method for a fuzzy neural network according to at least one of the preceding claims 3 to 8, **characterized in that** the input candidate data include at least one of the engine revolution, the intake air rate, and the intake air vacuum, and the output data is the rate of injected fuel adhering to the intake pipe.

10. An optimization method for a fuzzy neural network according to claim 8 or 9, **characterized in that** the input candidate data further include at least one of changing rates of the throttle opening and the engine revolution.

11. An optimization method for a fuzzy neural network according to at least one of the preceding claims 1 to 10, **characterized in that** said fuzzy neural network uses six processing layers.

12. An optimization method for a fuzzy neural network according to claim 11, **characterized in that** said fuzzy neural network uses the first through fourth layers for constituting an antecedent portion and the fifth and sixth layers for constituting a consequent portion.

13. An optimization method for a fuzzy neural network according to at least one of the preceding claims 1 to 12, **characterized in that** pieces of input portions are divided into the membership functions, each defined by the equation$\text{f(x) = 1/1 + exp(-wg(xi + wc)),}$ wherein wg represents the gradient of the sigmoid function and wc represents the central portion of the sigmoid function, which are used as coupling factors.

14. An optimization method for a fuzzy neural network according to at least one of the preceding claims 1 to 13, wherein said fuzzy neural network is used to control an object or an engine, respectively, **characterized in that** said optimization process is carried out during the execution of the control.

15. An optimization method for a fuzzy neural network according to claim 14, **characterized in that** in case the optimization process has come to an end a learning process is being carried out.
